(19) Europäisches Patentamt
European Patent Office
Office européen des brevets

(11) **EP 1 927 881 A1**

(12) **EUROPEAN PATENT APPLICATION**

(43) Date of publication:
**04.06.2008 Bulletin 2008/23**

(51) Int Cl.:
*G02B 27/28* (2006.01)    *G01M 11/02* (2006.01)
*G01J 4/04* (2006.01)

(21) Application number: **06124924.9**

(22) Date of filing: **28.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Agilent Technologies, Inc.**
**Santa Clara, CA 95051 (US)**

(72) Inventor: **Maestle, Ruediger**
**71032, Boeblingen (DE)**

(74) Representative: **Barth, Daniel Mathias et al**
**Agilent Technologies Deutschland GmbH**
**Patentabteilung**
**Herrenberger Strasse 130**
**71034 Böblingen (DE)**

(54) **Optical block with variable polarizing characteristics and method for generating different states of polarization using said block**

(57)    The invention relates to an optical apparatus for receiving an incident optical beam (L1), comprising an optical block (21) with a first birefringent plate (211) and a second birefringent plate (212) having a fixed position to each other and being positioned in series with respect to the propagation direction (z) of the optical beam (L1), wherein the widths (d1, d2) of the first and the second birefringent plate (211, 212) are varying along a first lateral direction (x) with respect to the propagation direction of the optical beam (L1), the first and second plates (211, 212) have each birefringent properties, the main optical axes (A1, A2) of said plates having different orientations, and wherein the optical block (21) receives the incident optical beam (L1) at a plurality of different positions relative to the first lateral direction (x), so that a plurality of output optical beams having different states of polarization are provided.

Fig.2

**Description**

BACKGROUND ART

The present invention relates to generating optical signals with defined polarization states.

For determining optical properties of an optical device under test (DUT), a set of probing signals with defined polarization states is commonly used. Such polarization states might be generated by means of a polarization controller, such as the Agilent 8169A Polarization Controller. This polarization controller allows for providing probe signals at precisely synthesized states of polarization. The response signals returning from the DUT allows for determining optical properties of a DUT. Information about the Agilent 8169A Polarization Controller can be drawn from the technical specifications available at Product or Service Web Pages of Agilent Technologies Inc. or from patent application with the publication number US 2004/0067062 A1 or patent application PCT/EP2005/056021 of the same applicant.

Different methods are known for determining optical properties the DUT. According to the so-called Mueller Method, probing signals at four precisely synthesized, e.g. tetragonal states of polarization are provided to the DUT and the power of the optical signals returning from the DUT are detected. From the known input states of polarization and the measured signal powers, the elements of so-called Mueller Matrix are determined. From elements of this Matrix, optical properties of the DUT, e.g. the minimum and maximum insertion loss, polarization dependent loss (PDL), the group delay (GD) or the differential group delay (DGD) can be derived.

Alternatively the so called Jones matrix method is known, wherein the optical properties are derived by measuring the output states of polarization of the signals returning from the DUT for at least two, preferably orthogonal states of polarization. In a further alternative a variant of the Mueller method might be applied by applying a set of six, preferably orthogonal states of polarization.

One problem of polarisation controllers known in the art is that while changing the wavelength of an input signal of the polarisation controller, the SOP system does not remain constant. Depending on the settings of the polarization controller, undesired changes of the SOP system over a regarded wavelength range may occur. It is known to use so-called achromatic wave plates showing a reduced dependency from the wavelength in a certain range. However, such wave plates are complex and expensive, and reduction of wavelength dependency might not be sufficient over the whole required wavelength range.

DISCLOSURE

It is an object of the invention to provide an improved generating of optical signals with defined polarization states. The object is solved by the independent claims. Further embodiments are shown by the dependent claims.

Each state of polarization (SOP) of the polarization controller can be regarded as a vector in a Stokes space. The end points of the different vectors set by the polarization controller, further also referred to as SOP system, span a geometric shape. Depending on the number of endpoints, the geometric shape is a line (two endpoints), a triangle (three endpoints) or a polyhedron (more that three endpoints).

For the case of four states of polarization used for the above-mentioned Mueller Method measurements, the polyhedron is a tetrahedron comprising four end points and four triangular faces. A regular tetrahedron is a tetrahedron with four equal triangular faces.

The invention is based on the insight that the absolute change of an SOP system within the Stokes space over the wavelengths is often of low relevance, as long as the geometric shape does not significantly change, i.e. variations of the relative orientations of the Stokes vectors to each other do not significantly change over the wavelength.

Aforementioned patent application PCT/EP2005/056021 discloses a controlling of a polarization controller with individually rotatable quarter and half waveplates so that variations of the shape of the polyhedron spanned by the SOP system are kept below a desired value while varying the wavelength of the input light.

According to embodiments of the invention an optical apparatus is provided for receiving an incident optical beam and generating a set of output beams having different states of polarization. The optical apparatus thereby comprises an optical block, the optical block further comprising a first birefringent plate and a second birefringent plate, whereby both plates have a fixed position to each other and are positioned optically in series with respect to the propagation direction of the incident optical beam. The widths of the first and the second birefringent plate are varying along a first lateral direction with respect to the propagation direction of the optical beam the first and second plates have each birefringent properties, whereby the main optical axes of said plates have different orientations.

The optical block is arranged to receive the incident optical beam at a plurality of different positions relative to the first lateral direction, so that a plurality of output optical beams having different states of polarization are provided.

In an embodiment, the optical block and a light transmitter being adapted for providing the incident optical beam are movable relative to each other along the first lateral direction; in other words, the optical block is movable relative to the incident light beam. Therewith, differently to polarization controllers being described above, embodiments of the present invention allows for realizing a polarization controller with just one optical element interacting with the light beam. The optical block comprises two birefringent plates whereby their comparable main optical axes have different orientations. The birefringent plates are arranged being serially passed through by the light beam, whereby the plates have a fixed position to each other and each show a variable width with respect to a lateral position (x-axis) in view of the propagation direction of the light beam (z-axis), so that a corresponding lateral movement leads to an intersection at positions with different widths of the birefringent plates.

The optical block is movable, relative to the incident beam, (at least) laterally in the direction, in which the widths vary. The movement direction of the optical block thereby might have as well components in direction of the beam axis (x-axis) and/or laterally vertical to the lateral direction of plate widths variations (z-axis).

In an embodiment, the first and second birefringent plates are wedge shaped, so that the plate widths increase or decrease linearly in dependence of the position along the first lateral direction.

In a further embodiment, the orientation of the main axes with respect to the light beam and the widths variations are designed such that, while moving the optical block relative to the incident beam, the polarization of the output beam of the polarization controller follows a spiral-form trajectory within the Stokes space.

In a further embodiment, the outer surfaces of the first and the second plates being passed by the optical beam are substantially parallel to each other and orthogonal with respect to the optical beam, and the inner surface of the first plate and the inner surface of the second plate being passed by the optical beam have a first and second angle with respect to the first lateral direction, therewith showing a first and second slope respectively.

Therefore, In a further embodiment, the angle between the light beam and the orientation of the main axis of the first birefringent plate is chosen about 59 degree, the angle between the light beam and the orientation of the main axis of the second birefringent plate is chosen about 10 degree, and the ratio of the first slope and second slope is chosen to be about 1/2,55.

In a further embodiment, the optical block is controlled to be moved to distinct lateral positions in order to generate a set of beams with precisely synthesized polarizations being significantly different in order to obtain optimum DUT characterization results.

In a further embodiment, the optical block is controlled to be moved to four distinct lateral positions in order to generate a set of light beams with state of polarizations forming a substantially regular tetrahedral SOP system.

In a further embodiment, the optical block comprises an optical carrier, preferably of glass, connecting the inner surfaces of the first and the second birefringent block.

In a further embodiment, the optical block is mechanically connected to a linear drive in order to provide a lateral movement of the optical block. Alternatively, the optical block might be mounted to be rotatable around a rotational axis being substantially perpendicular to the optical beam, if being moved by a rotational drive.

In further embodiment, the polarization controller comprises a control circuit for controlling the drive to move the optical block into determined positions, e.g. four distinct positions for generate a set of Stokes vectors spanning a regular polyhedron.

In a further embodiment, the four distinct positions are chosen such that the variation of a volume of the polyhedron spanned by the corresponding states of polarizations is at least one of: below 12 percent, while varying the wavelength of the input signal within a wavelength rage between 1250 - 1650 nanometer, and below 4 percent, while varying the wavelength of the input signal within a wavelength rage between 1300 - 1500 nanometer.

In a further embodiment, the polarization controller comprises a user interface for receiving at least one of the following parameters: the wavelength range, the number of states of polarization, the geometric shape of the SOP system, and a merit function representing a maximum value of shape variation over the wavelength, e.g. the change of volume of a chosen polyhedron.

Generally, arbitrary merit functions might be defined, e.g. a function representing a mean variation of a sum of the angles between the Stokes vectors over the wavelength range, a maximum variation of any angle between the Stokes vectors over the wavelength range, a mean variation of the polyhedron volume over the wavelength range, if the number of states of polarization is greater than 3, or a mean or maximum variation of the polyhedron volume over the wavelength range, if the number of states of polarization is greater than 3. It is apparent the merit functions listed above only serve as examples.

With properly chosen and adjusted wave plates, retardance errors of the wave plates over the wavelength are at least partly converted into a slow rotation of the complete SOP-system, whereby the change of the shape spanned by the SOP vectors over wavelength is below a determined limit. As shape changes affect noise and sensitivity to measurement errors like detector PDL, the invention allows for significantly reducing such errors.

In a further embodiment, the apparatus further comprises a polarizing circuit, a detector circuit being arranged in optical series behind the optical block and an analyzer. The polarizing circuit provides a polarization to the plurality of output optical beams of the optical block, thereby generating a set of polarized optical beams having different optical powers. The detection circuit receives the set of polarized output beams provides an opto-electrical conversion to the beams of said set, and provides a corresponding set of electrical signals to the analyzer. The analyzer determines a polarization property of the incident optical beam therefrom.

In a further embodiment, if the incident beam is kept at a fix position, while the optical block is being moved, the detector circuit might be a single element receiving the different beams being output by the optical block sequentially. Alternatively, if the optical block is kept at a fix position, while the incident beam is being moved, the detector circuit might comprise a plurality of detector elements, each being positioned at selected positions along the first lateral position (x-axis) behind the output surface of the optical block.

In an alternative embodiment, the apparatus further comprises means for receiving a DUT in order to provide the DUT with the set of output optical beams being output from the optical block. The detector circuit receives response beams from the DUT being generated in response to the optical output beams, and generates a set of electrical signal having amplitudes corresponding each the optical power of the response signals. The analyzer receives the set of electrical signals and determines a DUT property therefrom.

Embodiments of the invention can be partly or entirely embodied or supported by one or more suitable software programs, which can be stored on or otherwise provided by any kind of data carrier, and which might be executed in or by any suitable data processing unit.

BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1a shows a block diagram of a first setup for determining optical properties of a DUT, comprising a polarization controller according to the invention,

Fig. 1b shows a block diagram of a measurement setup for determining a polarization property of an incident light, comprising a polarization controller according to the invention,

Fig. 2 shows a more detailed three dimensional view of the polarization controller of Fig. 1,

Fig. 3 shows a top view of the polarization controller according to Fig.2 and a table of exemplary dimension values,

Fig. 4 shows a representation of a trajectory of the polarization state of an output light of the polarization controller in dependence on a setting of the polarization controller in a Poincar6 sphere, and a set of four exemplary states of polarization chosen from the trajectory,

Fig. 5 shows a representation of four trajectories pertinent to the chosen states of polarization in dependence on the wavelength of the incident light, and

Fig. 6 shows angle variations over wavelength of angles between stokes vectors of an exemplary tetrahedral SOP system, and a corresponding relative volume variation over wavelength of the chosen states of polarization.

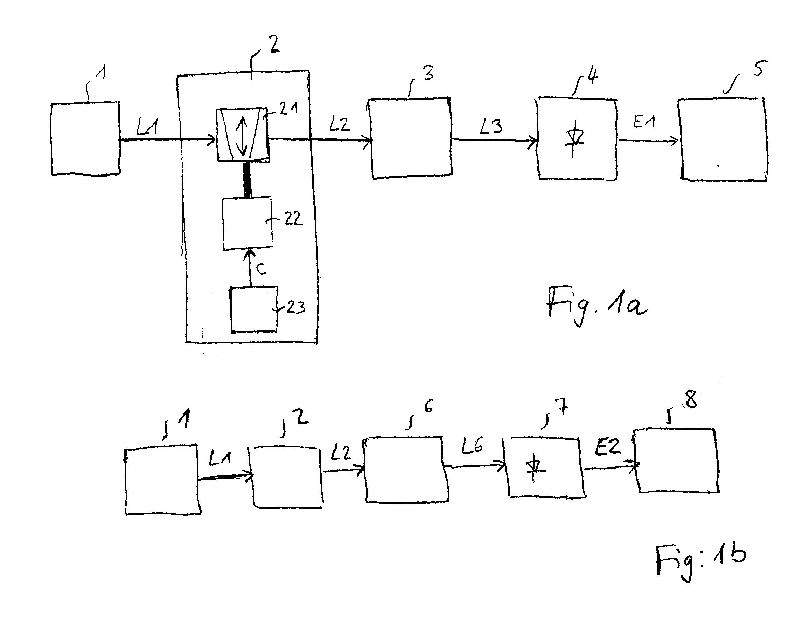

Fig. 1a shows a first setup for determining optical properties of an optical device under test (DUT) 3. A light source 1, preferably a tunable laser source, generates an input beam L1, whereby the input light L1 might have a known state of polarization. Said input beam L1 is provided to a polarization controller 2, which provides a polarization controller output beam or probe signal L2 to be provided to the DUT 3, thereby transforming, dependent on a setting of the polarization controller, the input state into one of a set of different output states of polarization, e.g. one of a set of four tetragonal polarization states for performing a four states Mueller Matrix method. In response to the probe signals L2, the DUT 3 emits response signals L3 respectively.

The response signals L3 might be generated by transmission through the DUT 3, by reflection from the DUT 3 or by a combined transmission and reflection. The DUT response signals L3 are provided to an optical detection circuit 4, which determines an optical power of each the response signals L3, and generates corresponding electrical signals E1, each having a current or voltage value being dependent, e.g. proportional, with relation the corresponding optical power. Therewith, for each one of the set of polarization states of the light signal L1, a corresponding signal power is determined to be provided to a DUT property analyzer 5. By way of example, the DUT property analyzer 5 determines a polarization dependent loss PDL, an intensity loss IL, a group delay GD or a differential group delay DGD of the DUT 3 by applying the above-mentioned Mueller Matrix method.

The relationship between the various polarization states on the one hand and the corresponding set of signal powers on the other hand allows getting an indication of the DUT's optical behavior. In case a tunable laser source is used as a light source 1, wavelength sweeps of the light signal 2 over a certain wavelength range might be performed. This allows recording the DUT's optical properties over the swept wavelength range.

In the example shown here, the polarization controller 2 comprises a movable optical block 21, a drive 22 and a drive controller 23.

Fig. 1b shows a second setup comprising the polarization controller 2 of Fig. 1a, for determining a polarization property of an incident light, e.g. the state of polarization, which might not be known or which might to be asserted, generated by way of example by the same light source 1 of Fig. 1a. The input beam L1 generated by the light source 1 is provided to the polarization controller 2, which provides a polarization controller output beams L2, thereby transforming, dependent on a setting of the polarization controller, the input state into different output states of polarization. The output beams L2 having different states of polarization are provided to a polarizer (or polarization filter) 6. The polarizer 6 generates a set of polarized beams L6 from the output beams L2, whereby each of the polarized beams of said set L6 shows an optical power being dependent on the state of polarization of the corresponding output beam. The polarized beams are provided to a detection circuit 7 that provides an opto-electrical conversion to the polarized beams L6 and provides corresponding electrical signals E2 to a light beam analyzing circuit 8. By way of example, the light beam analyzing circuit 8 determines a state of polarization of the incident light beam L1.

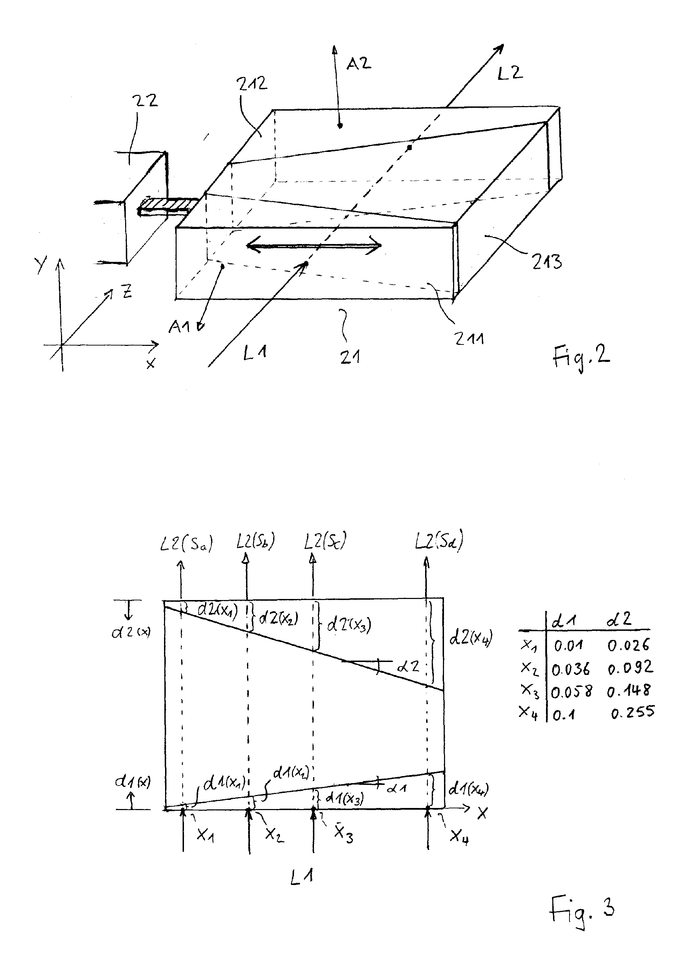

Fig. 2 shows the polarization controller 2 in more details. The movable block 21 comprises an optical carrier 213 carrying a first birefringent plate 211 at a first surface and a second birefringent plate 212 at a second surface opposite to the first surface. The optical carrier 213 does not have birefringent behavior, so that it does not change the polarization of the beam traveling through. The optical carrier serves for maintaining a fixed position of the birefringent plates to each other and to the drive. Alternatively, any other carrier, i.e. a supporting plate with the plates 211 and 212 being mounted upon, can being can be used.

Birefringent plates are also known as retardation plates, being optical elements with two principal or main axes, one slow axis and one fast axis that resolve an incident polarized beam into two mutually perpendicular polarized beams. Their operation is based on birefringent linear effect, which is the difference in the refractive indices for the beams with parallel and normal polarization towards the optical axis of the crystalline quartz material being within the wave plate plane. The emerging beam recombines to form a particular single polarized beam.

The polarization change of a beam traveling through such plate depends from the direction of the main axes as well as from the width or thickness. Polarization controllers known in the art often comprises a combination of a so-called half wave plate and a so-called quarter wave plate, whereby both have fixed thicknesses. The thickness of the half wave plate thereby is chosen such that the phase difference is one half of the wavelength (zero-order wave plate) or defined multiples of one half of the wavelength (multi-order wave plates). A linearly polarized beam incident on a half wave plate emerges as a linearly polarized beam but rotates such that its angle to the optical axis is twice that of the incident beam. The thickness of the so-called quarter wave plate thereby is chosen such that the phase difference is one quarter of the wavelength (zero-order wave plate) or defined multiples of one quarter of the wavelength (multi-order wave plates). If the angle q between the electric field vector of an incident linearly polarized beam and the principal plane of the quarter wave plate is 45, the emergent beam is circularly polarized.

Differently to the above-described arrangement using plates of fixed widths, the plates 211 and 212 each have a varying width or thickness in direction of the first lateral direction x with respect to the propagating direction z of the incident beam L1.

The birefringent plates 211 and 212 each have each birefringent property, whereby the main optical axes, e.g. both so-called fast axes, of said plates have different orientations with respect to the optical beam L1. In the example described above, the angle between the light beam and the orientation of the fast axis of the first birefringent plate is chosen about 59 degree, the angle between the light beam and the orientation of the fast axis of the second birefringent plate is chosen about 10 degree.

The movable optical block 21, in the following also being referred to as block 21, is mechanically connected to the drive 22 that moves the block 21 along the first lateral direction x with respect to the optical beam L1, so that the optical beam L1 passes though different widths of the first and the second birefringent plates 211 and 212, dependent on the lateral position x of the block 21.

By way of example, the first and second birefringent plates 211 and 212 have wedge shaped forms, so that the widths being passed through by the optical beam L1 vary linearly when moving the block 21. The outer surfaces of the first and the second plates 211 and 212, representing the optical input and an optical output respectively of the polarization controller are preferably parallel to each other and orthogonal with respect to the optical beam.

The inner surface of the first plate 211 is inclined by a first inclination angle $\alpha 1$ and the inner surface of the second plate 212 is inclined by a second inclination angle $\alpha 2$ having opposite signs and being generally different in their absolute values. In the example shown, the widths of both plates increase in the first lateral direction x.

Referring to Fig. 1a, the optical behavior of the DUT 3 can be described by means of the aforementioned Mueller matrix M, which is a 4 x 4 real matrix. Any equivalent matrix that represents the DUT's optical properties, e.g. a Jones matrix, can be used as well. The probing signal L2 incident upon the DUT 3 can be described by an input Stokes vector $S_{in} = (S_a, S_b, S_c, S_d)$, and the response signal L3 obtained from the DUT 3 can be described by an output Stokes vector $S_{out} = (S_{a\_out}, S_{b\_out}, S_{c\_out}, S_{d\_out})$.

A Stokes vector S = (S0, S1, S2, S3) completely describes the power and polarization state of an optical wave, whereby S0 denotes the total intensity, S1 indicates the degree of linear horizontal (S1 > 0) or vertical polarization (S1 < 0), S2 indicates the degree of linear +45° (S2 > 0) or -45° (S2 < 0) polarization, and S3 corresponds to the degree of right-hand circular (S3 > 0) or left-hand circular (S3 < 0) polarization.

The interaction of an incident polarized wave characterized by the Stokes vector $S_{in}$ with the DUT can be expressed by means of the matrix equation:

$$S_{out} = M \cdot S_{in}$$

This matrix equation represents four linear equations, but only the first one of said four equations is interesting for practical purposes. According to said first equation, the signal power $S_{a\_out}$ of a DUT response signal can be expressed as follows:

$$S_{a\_out} = m_{11} \cdot S_a + m_{12} \cdot S_b + m_{13} \cdot S_c + m_{14} \cdot S_d$$

In this equation, the Mueller matrix elements $m_{1k}$, with k = 1, 2, 3, 4, correspond to the first row of the Mueller matrix M. In order to determine the elements $m_{11}$, $m_{12}$, $m_{13}$, $m_{14}$ of the Mueller matrix, four different well-defined states of polarization $S_a, S_b, S_c, S_d$ are consecutively applied to the device under test, and the signal powers of the corresponding DUT response signals are measured.

Once the Mueller matrix elements $m_{11}$, $m_{12}$, $m_{13}$, $m_{14}$ are known, a multitude of optical properties of the DUT can be derived there from. For example, the Mueller matrix element $m_{11}$ indicates the "average loss" of the DUT. The minimum transmission $T_{min}$ and the maximum transmission $T_{max}$ can be obtained as

$$T_{min} = m_{11} - \sqrt{m_{12}{}^2 + m_{13}{}^2 + m_{14}{}^2}$$

$$T_{max} = m_{11} + \sqrt{m_{12}{}^2 + m_{13}{}^2 + m_{14}{}^2}$$

From these transmission extremes, the polarization dependent loss (PDL) can be determined as:

$$PDL_{dB} = 10 \cdot \log\left(\frac{T_{max}}{T_{min}}\right)$$

Further, other optical properties can be derived from the elements of the first row of the Mueller matrix.

In order to generate the above described set of polarizations $S_{in} = (S_a, S_b, S_c, S_d)$, the movable block 21 is controlled to be moved to corresponding distinct lateral positions. In order to obtain good results from the above-described calculations, it is required that the polarizations of the set of polarizations are significantly different to each other. Therefore, a set of four polarization states forming a tetragonal polarization system in the so-called Poincaré sphere. The endpoints of the four Stokes vectors $S_a$, $S_b$, $S_c$, $S_d$ define a regular tetrahedron, which is the most symmetric spherical geometric shape of four points.

Fig. 3, on the left hand side, therefore shows a top view of the block 21 showing the width d1(x) and d2(x) for four corresponding lateral positions $x_1$, $x_2$, $x_3$, $x_4$. The block 21 is therefore being driven to move sequentially to those positions. Therefore the drive 22 receives a corresponding control signal C1 form the controlling circuit 23.

In the example shown here, the angle between the light beam and the orientation of the fast axis of the first birefringent plate is chosen about 59 degree, the angle between the light beam and the orientation of the fast axis of the second birefringent plate is chosen about 10 degree.

The inner surface of the first plate by way of example shows a slope of 100 micrometer over the length of the block in by way of example positive direction of the first lateral direction (e.g. 20 millimeter) and the inner surface of the second plate shows a slope of 255 micrometer in the same direction. This results in a slope ratio of 1:2,55.

On the right hand side, Fig 3 shows a table with corresponding values in micrometer of the widths d1 and d2 of the first and second plates 211 and 212 at the positions $x_1$, $x_2$, $x_3$, $x_4$.

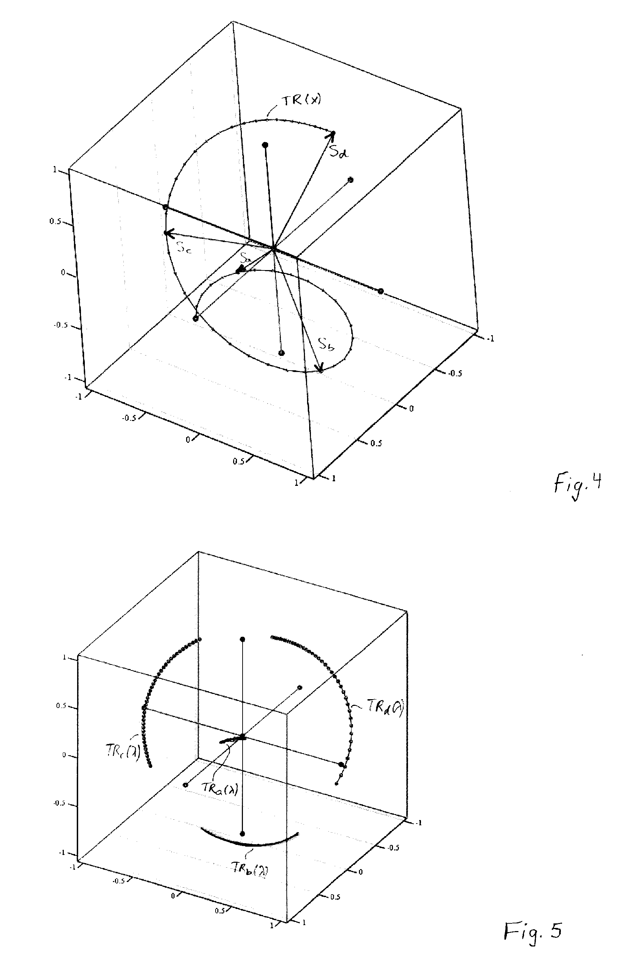

Fig. 4 shows a representation of the set of resulting polarization states $S_a$, $S_b$, $S_c$, $S_d$ in a Poincaré sphere. The four Stokes vectors are lying on a trajectory TR(x). The trajectory TR represents a variation of the polarization dependent on the position x of the block 21 with respect to the beam L1. The endpoints of the four Stokes vectors $S_a$, $S_b$, $S_c$, $S_d$ are chosen to define a substantially regular tetrahedron.

Fig. 5 shows a representation of a set of trajectories $TR_a(\lambda)$, $TR_b(\lambda)$, $TR_c(\lambda)$, $TR_d(\lambda)$ in the Poincaré sphere showing the variation of the polarization states $S_a$, $S_b$, $S_c$, $S_d$ over the wavelength $\lambda$ within a range from 1250 nanometer to 1650 nanometer. Due to the properly chosen dimensions of the plates and orientation of the main axes as described under Fig. 3, a variation the wavelength leads to a slow rotation of the tetrahedron defined by the Stokes vectors, whereby the change of the shape of the tetrahedron is rather small, being described in the following.

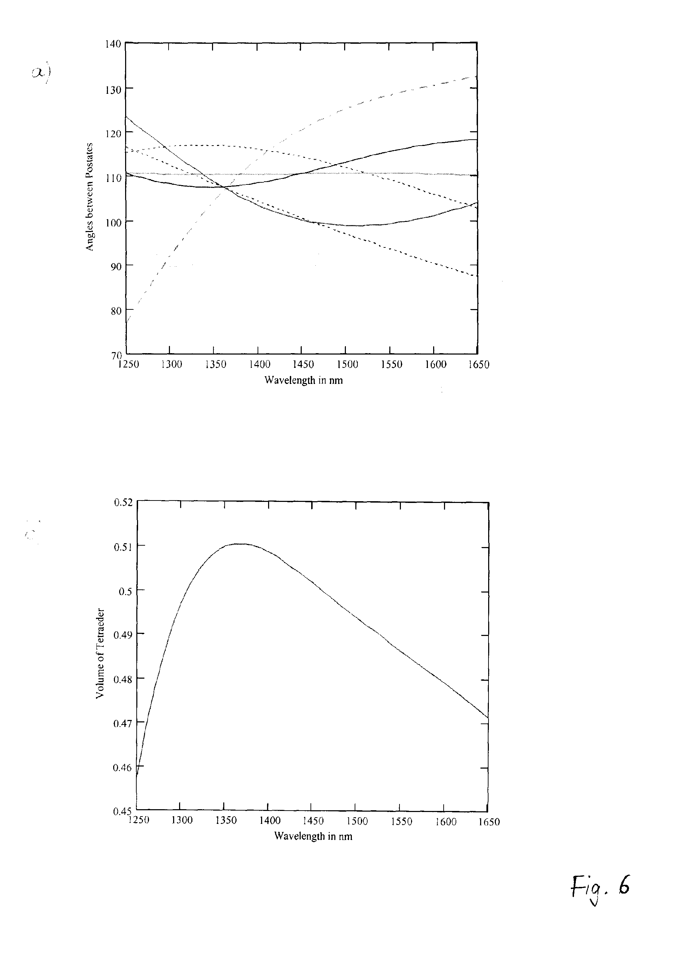

Fig. 6 in the upper part a) shows a diagram with values in degree of the six relative angles $\alpha12$, $\alpha13$, $\alpha14$, $\alpha23$, $\alpha24$, $\alpha34$ between the Stokes vectors $S_a$, $S_b$, $S_c$ and $S_d$ over wavelength within a range between 1250 nanometer (nm) and 1650 nm. The Stokes vectors result from the movable block example described under Fig. 3.

As can be seen from the diagram, the variation of any angle is below 50 degree over the whole wavelength range between 1250 nm and 1650 nm and far below, if a sub-range, e.g. a wavelength range between 1350 nm and 1550 nm is regarded.

Fig. 6 in the lower part shows a diagram of a corresponding relative volume variation over a wavelength range between 1250 nm and 1650 nm for the above-described SOP system. The following formula describes the volume as a function of the wavelength $\lambda$ spanned by the vectors $S_a$-$S_d$:

$$V(\lambda) = 1/6 \cdot [(S_d(\lambda) - S_a(\lambda)) \times \cdot (S_c(\lambda) - S_a(\lambda))] \cdot (S_b(\lambda) - S_a(\lambda))$$

The variation of a volume of the tetrahedron spanned by the corresponding states is an indication of the stability of the tetrahedron over wavelength. As shown here, this variation is below 12 percent, while varying the wavelength of the input signal within a wavelength rage between 1250 -1650 nm, and below 5 percent, while varying the wavelength of the input signal within the sub wavelength rage between 1350 - 1550 nm.

In summary, with properly chosen wave plate dimensions and orientations, wavelength variations lead to slow rotations of the SOP-system, whereby the change of the shape spanned by the SOP vectors over wavelength is kept small. This allows for using such polarization controller for rather precise polarization characteristics measurements of a DUT over a wide wavelength ranges. As shape changes affect noise and sensitivity to measurement errors like detector PDL, the invention allows for minimizing such errors.

**Claims**

1. An optical apparatus for receiving an incident optical beam (L1), comprising:

   an optical block (21) comprising a first birefringent plate (211) and a second birefringent plate (212) having a fixed position to each other and being positioned in series with respect to the propagation direction (z) of the incident optical beam (L1), wherein
   the widths (d1, d2) of the first and the second birefringent plate (211, 212) are varying along a first lateral direction (x) with respect to the propagation direction of the optical beam (L1),
   the first and second plates (211, 212) have each birefringent properties, whereby the main optical axes (A1, A2) of said plates have different orientations, and

wherein the optical block (21) is adapted to receive the incident optical beam (L1) at a plurality of different positions relative to the first lateral direction (x), so that a plurality of output optical beams having different states of polarization are provided.

2. The optical apparatus of claim 1, wherein the optical block (21) and a light transmitter being adapted for providing the incident optical beam (L1) are movable relative to each other along the first lateral direction (x).

3. The optical apparatus of claim 1 or any one of the above claims, further comprising a detection circuit (3, 7) adapted for receiving a plurality of response optical beams (L3, L6) being generated in response to the plurality of output optical beams (L2), and providing an opto-electrical conversion to said beams (L3, L6), and an analyzer (4, 8) adapted for receiving a set of corresponding electrical signals (E1, E2) and determining a polarization property therefrom.

4. The optical apparatus of claim 1 or any one of the above claims, wherein the first and second birefringent plates (211, 212) are wedge shaped, so that the widths (d1 (x), d2(x)) each increases or decreases linearly in dependence of the position along the first lateral direction (x).

5. The optical apparatus of claim 4, wherein the angle between the light beam (L1) and the orientation of the main axis of the first birefringent plate (211) is about 59 degree, and the angle between the light beam (L1) and the orientation of the main axis of the second birefringent plate (212) is about 10 degree.

6. The optical apparatus of claim 4 or 5, wherein the ratio of increase of the widths of the first birefringent plate (211) with respect to the second birefringent plate (212) in the first lateral position (x) is about 1:2,55.

7. The optical apparatus of claim 4, or any one of the claims 5 and 6, wherein the outer surfaces of the first and the second plates (211, 212) being passed by the optical beam (L1) are parallel to each other and orthogonal with respect to the optical beam (L1), and wherein the inner surfaces being passed by the optical beam each have a different angle ($\alpha 1, \alpha 2$) with respect to the first lateral direction (x), each being different from zero with respect to the outer surfaces.

8. The optical apparatus of claim 1 or any one of the above claims, wherein the optical block (21) is adapted to be moved to four distinct lateral positions ($x_1$, $x_2$, $x_3$, $x_4$) relative to the incident optical beam (L1) in order to generate a set of light beams ($L2(S_a)$, $L2(S_b)$, $L2(S_c)$, $L2(S_d)$) representing a preferably regular tetrahedral SOP system ($S_a$, $S_b$, $S_c$, $S_d$).

9. The optical apparatus of claim 1 or any one of the above claims, wherein the movable block (21) comprises an optical carrier (213), preferably of glass, connecting the inner surfaces of the first and the second birefringent block (211, 212).

10. The optical apparatus of claim 1 or any one of the above claims, wherein the movable block (21) is mechanically connected to a linear drive (22) in order to provide a lateral movement of the movable block.

11. The optical apparatus of claim 1 or any one of the above claims 1- 9, wherein the optical block (21) is adapted to be rotatable around a rotational axis perpendicular to the optical beam being moved by a rotational drive, so that a rotation is translated into a lateral movement of the optical block.

12. The optical apparatus of claim 10 or 11, further comprising a control circuit (23) adapted to control the drive (22) to move the optical block (21) into determined lateral positions ($x_1$, $x_2$, $x_3$, $x_4$) .

13. The optical apparatus of claim 12, wherein the control unit (23) is adapted to determine four distinct positions of the optical block (21) in order to generate a set of four states of polarizations representing a substantially regular polyhedron within a Poincaré sphere.

14. The optical apparatus of claim 13, wherein the control unit (23) is adapted to determine the four distinct positions such, that the variation of a volume of the polyhedron spanned by the corresponding states of polarizations ($S_a$, $S_b$, $S_c$, $S_d$) is at least one of:

    below 12 percent, while varying the wavelength of the input signal (L1) within a wavelength rage between 1250 - 1650 nanometer, and
below 5 percent, while varying the wavelength of the input signal (L1) within a wavelength rage between 1350
- 1550 nanometer.

15. A method of converting a polarization of an incident optical beam (L1) being incident to an optical apparatus, the optical apparatus comprising an optical block (21) comprising a first birefringent plate (211) and a second birefringent plate (212) having a fixed position to each other and being positioned in series with respect to the propagation direction (z) of the optical beam (L1), wherein the widths (d1, d2) of the first and the second birefringent plate (211, 212) are varying along a first lateral direction (x) with respect to the propagation direction of the optical beam (L1), wherein the first and second plates (211, 212) have each birefringent properties, and wherein the main optical axes (A1, A2) of said plates have different orientations, comprising:

controlling the apparatus to receive the incident optical beam (L1) at a plurality of different positions of the optical block (21) relative to the first lateral direction (x), so that a plurality of output optical beams having different states of polarization are provided.

16. A software program or product preferably stored on a data carrier, for executing the above method claim, when run on a data processing system of a optical apparatus (2).

Fig. 1a

Fig. 1b

Fig. 2

| | $d1$ | $d2$ |
|---|---|---|
| $x_1$ | 0.01 | 0.026 |
| $x_2$ | 0.036 | 0.092 |
| $x_3$ | 0.058 | 0.148 |
| $x_4$ | 0.1 | 0.255 |

Fig. 3

Fig. 4

Fig. 5

Fig. 6

**European Patent Office**

**EUROPEAN SEARCH REPORT**

Application Number

EP 06 12 4924

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 495 890 A (PLUTA MAKSYMILIAN) 17 February 1970 (1970-02-17) * column 2, line 28 - line 59; figures 1,3 * | 1,2,4,8, 10,15 | INV. G02B27/28 G01M11/02 G01J4/04 |
| D,A | US 2004/067062 A1 (STEFANY THOMAS [DE]) 8 April 2004 (2004-04-08) * the whole document * | 1,15 | |
| A | HENTSCHEL C ET AL: "PDL MEASUREMENTS USING THE AGILENT 8169A POLARIZATION CONTROLLER" INTERNET CITATION, [Online] 9 January 2002 (2002-01-09), XP007900563 Retrieved from the Internet: URL:http://cp.literature.agilent.com/litweb/pdf/5964-9937E.pdf> [retrieved on 2006-05-09] * the whole document * | 1,15 | |

TECHNICAL FIELDS SEARCHED (IPC)

G02F
G02B
G01M
G01J
G01N

The present search report has been drawn up for all claims

| Place of search | Date of completion of the search | Examiner |
|---|---|---|
| Munich | 27 April 2007 | Frank, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

EP 06 12 4924

This annex lists the patent family members relating to the patent documents cited in the above-mentioned European search report.
The members are as contained in the European Patent Office EDP file on
The European Patent Office is in no way liable for these particulars which are merely given for the purpose of information.

27-04-2007

| Patent document cited in search report | | Publication date | Patent family member(s) | | Publication date |
|---|---|---|---|---|---|
| US 3495890 | A | 17-02-1970 | CH 438780 A<br>DE 1447254 A1<br>GB 1096995 A<br>SE 324661 B | | 30-06-1967<br>19-12-1968<br>29-12-1967<br>08-06-1970 |
| US 2004067062 | A1 | 08-04-2004 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040067062 A1
- EP 2005056021 W